# EUROPÄISCHE PATENTANMELDUNG

(11) **EP 1 588 907 A1**
(43) Veröffentlichungstag der Anmeldung: **26.10.2005**
(21) Anmeldenummer: 05090114.9
(22) Anmeldetag: 20.04.2005
(51) Int. Cl.: B60R 21/20

(54) **Kraftfahrzeugairbag**

(30) Priorität: 22.04.2004 DE 102004020643
(71) Anmelder: TAKATA-PETRI (Ulm) GmbH, 89081 Ulm (DE)
(72) Erfinder: Riedel, Andreas, 89257 Illertissen (DE); Sendelbach, Hans-Peter, 89250 Senden (DE); Heudorfer, Benedikt, 89278 Nersingen (DE); Maidel, Jochen, 89075 Ulm (DE); Weyrich, Christian, 89231 Neu-Ulm (DE)
(74) Vertreter: Baumgärtel, Gunnar

(57) **Zusammenfassung**

Die Erfindung bezieht sich auf eine Sicherheitsvorrichtung, insbesondere für ein Kraftfahrzeug, mit einem aufblasbaren Gassack (50), der zum Schützen eines auf einem Fahrzeugsitz (10) befindlichen Fahrzeuginsassen (130) - insbesondere bei Eintritt eines Unfalls oder einer Gefahrensituation - aufgeblasen und seitlich neben dem Fahrzeuginsassen (130) entfaltet wird, und mit einer mit dem Gassack (50) zusammenwirkenden Stützeinrichtung (80, 90, 100, 200), die eine seitliche Bewegung des Gassacks (50) beim Eintauchen des Fahrzeuginsassen (130) in den Gassack (50) verhindert oder zumindest reduziert.

Der Erfindung liegt die Aufgabe zugrunde, eine Sicherheitsvorrichtung anzugeben, mit der sich das Verletzungsrisiko eines Fahrzeuginsassen im Falle eines Unfalls sehr zuverlässig reduzieren lässt.

Diese Aufgabe wird erfindungsgemäß dadurch gelöst, dass der Gassack (50) auf der der Fahrzeuginnenseite zugewandten Seite des Fahrzeuginsassen (130) entfaltet wird.

## Beschreibung

Die Erfindung bezieht sich auf eine Sicherheitsvorrichtung mit den Merkmalen gemäß dem Oberbegriff des Anspruchs 1.

Eine derartige Sicherheitsvorrichtung ist aus der US-Patenschrift 5,636,862 bekannt. Diese vorbekannte Sicherheitsvorrichtung ist zwischen einer Fahrzeugaußenwand, beispielsweise einer Fahrzeugtür, eines Fahrzeugs und einem Fahrzeugsitz, auf dem sich der zu schützende Fahrzeuginsasse befindet, angeordnet. Im Falle eines Unfalls wird ein Gassack der Sicherheitsvorrichtung derart aufgeblasen, dass sich dieser zwischen dem Fahrzeuginsassen und der Fahrzeugaußenwand entfaltet; dadurch wird der Fahrzeuginsasse vor einem Aufschlagen bzw. Inkontakttreten mit der Fahrzeugaußenwand geschützt. An dem Gassack der vorbekannten Sicherheitsvorrichtung ist ein Spannband als Stützeinrichtung angeordnet; dieses Spannband hält den Gassack seitlich fest, so dass eine seitliche Bewegung des Gassacks beim Eintauchen des Fahrzeuginsassen in den Gassack verhindert oder zumindest reduziert wird.

Aus der deutschen Patentschrift 42 07 253 C2 und der deutschen Offenlegungsschrift 199 04 071 A1 sind außerdem Sicherheitsvorrichtungen bekannt, bei denen zwischen zwei Sitzen einer Sitzbank ein Gassack im Falle eines Unfalls entfaltet wird, um das Zusammenstoßen der auf der Sitzbank befindlichen Fahrzeuginsassen zu verhindern.

Der Erfindung liegt die Aufgabe zugrunde, eine Sicherheitsvorrichtung anzugeben, mit der sich das Verletzungsrisiko eines Fahrzeuginsassen im Falle eines Unfalls sehr zuverlässig reduzieren lässt.

Diese Aufgabe wird ausgehend von einer Sicherheitsvorrichtung der eingangs angegebenen Art erfindungsgemäß durch das kennzeichnende Merkmal des Anspruchs 1 gelöst. Vorteilhafte Ausgestaltungen der erfindungsgemäßen Sicherheitsvorrichtung sind in Unteransprüchen angegeben.

Danach ist erfindungsgemäß vorgesehen, dass der Gassack mit der Stützeinrichtung auf der Fahrzeuginnenseite angeordnet ist, also auf der der Fahrzeuginnenseite zugewandten Seite des Fahrzeuginsassen bzw. auf der der Fahrzeuginnenseite zugewandten Seite des Fahrzeugsitzes. Bei dem Fahrzeugsitz kann es sich um einen "Einzelsitz" oder um einen Sitz einer Sitzbank handeln.

Ein wesentlicher Vorteil der erfindungsgemäßen Sicherheitsvorrichtung besteht darin, dass aufgrund der Anordnung des Gassacks auf der Fahrzeuginnenseite eine Interaktion des Sicherheitsgurtes auf der Gurtschlossseite mit dem Abdomenbereich des Fahrzeuginsassen verhindert wird. Verletzungen des Abdomenbereichs aufgrund des Gurtschlosses bzw. des Sicherheitsgurtes werden durch den auf der Fahrzeuginnenseite angeordneten Gassack vermieden, indem eine seitliche Bewegung des Fahrzeuginsassen in Richtung des Fahrzeuginneren verhindert wird.

Ein weiterer wesentlicher Vorteil der erfindungsgemäßen Sicherheitsvorrichtung ist darin zu sehen, dass diese aufgrund der Anordnung auf der Fahrzeuginnenseite einen Zusammenstoß nebeneinander sitzender Fahrzeuginsassen verhindert; insbesondere kann ein Zusammenstoßen der Insassenköpfe verhindert werden.

Ein dritter wesentlicher Vorteil der erfindungsgemäßen Sicherheitsvorrichtung besteht darin, dass diese einen zusätzlichen Schutz auch dann gewährleistet, wenn der zu schützende Fahrzeuginsasse auf der stoßabgewandten Fahrzeugseite sitzt; denn der sich auf der Fahrzeuginnenseite entfaltende Gassack schützt in diesem Fall vor einem Zusammenstoß des (stoßabgewandt sitzenden) Fahrzeuginsassen mit einem stoßzugewandt sitzenden Fahrzeuginsassen oder mit intrudierenden Fahrzeugbereichen (z. B. Fahrzeug-Interieur).

Ein vierter wesentlicher Vorteil der erfindungsgemäßen Sicherheitsvorrichtung ist darin zu sehen, dass der Gassack mit einer Stützeinrichtung zusammenwirkt, die eine seitliche Bewegung des Gassacks verhindert oder zumindest reduziert. Die Stützeinrichtung verhindert, dass der Gassack bei einem Eintauchen des Fahrzeuginsassen wegknickt oder "ausweicht", wodurch die Schutzwirkung des Gassacks reduziert werden könnte.

Gemäß einer vorteilhaften Ausgestaltung der Sicherheitsvorrichtung ist vorgesehen, dass der Gassack im Falle eines Unfalls auf einen Druck von zumindest 100 kPa, insbesondere von zumindest 150 kPa, aufblasbar ist. Ein derart hoher GassackInnendruck vermindert die Gefahr, dass der Gassack unter Beaufschlagung der Insassen-Torsomasse wegknicken und die Schutzwirkung des Gassacks reduziert werden könnte. Eine Sicherheitsvorrichtung mit einem Gassackdruck von mindestens 100 kPa ermöglicht es außerdem, sowohl den Kopf des Fahrzeuginsassen als auch den gesamten Körper des Fahrzeuginsassen zuverlässig zurückzuhalten.

Um zu vermeiden, dass das in den Gassack im Falle eines Unfalls eingefüllte Gas den Gassack ungewollt oder vorzeitig unter Druckabfall verlassen kann, wird es als vorteilhaft angesehen, wenn der Gassack eine Isolationsschicht oder eine Beschichtung aufweist, die weniger gasdurchlässig als die übrige Gassackhülle des Gassacks ist. Die Isolationsschicht bzw. die Beschichtung der Gassackhülle weist vorzugsweise Silikon oder eine Silikonverbindung auf oder besteht vorzugsweise aus Silikon oder einer Silikonverbindung, da Silikon ein besonders gasdichtes Material und leicht verarbeitbar ist.

Die Stützeinrichtung zum Fixieren des Gassacks in seiner "Schutzposition" lässt sich beispielsweise durch zumindest ein Spannband bilden, das mit seinem einen Spannbandende mit dem Gassack und mit seinem anderen Spannbandende mit dem Fahrzeugsitz in Verbindung steht. Das mit dem Gassack in Verbindung stehende Spannbandende ist vorzugsweise im Bereich desjenigen Gassack-Hüllenabschnitts angebracht, der von dem Gasgenerator der Sicherheitsvorrichtung möglichst weit entfernt ist. Je weiter nämlich der Befestigungspunkt des Spannbandes am Gassack vom Befestigungspunkt des Gassacks am Fahrzeug entfernt ist, um so größer ist die Fixierwirkung des Spannbandes. Demgemäß ist es besonders vorteilhaft, wenn das mit dem Gassack in Verbindung stehende Spannbandende im Bereich einer Vorderkante des Gassacks angebracht ist.

Um eine von der Unfallschwere abhängige Spannkraft des Spannbandes zu erreichen, wird das Spannband vorzugsweise derart angeordnet, dass es durch den in den Gassack eintauchenden Fahrzeuginsassen selbsttätig bzw. automatisch gespannt oder "nachgespannt" wird. Bevorzugt verläuft das Spannband hierzu abschnittsweise im Bereich der Schulter und/oder des Rückens des Fahrzeuginsassen, so dass der Fahrzeuginsasse beim Eintauchen in den Gassack auf das Spannband einwirkt. Ein automatisches Spannen von Spannbändern durch den Fahrzeuginsassen ist nicht nur bei Sicherheitsvorrichtungen möglich, bei denen der Gassack auf der Fahrzeuginnenseite angeordnet ist, sondern selbstverständlich auch bei Sicherheitsvorrichtungen wie der eingangs beschriebenen, bei denen der Gassack auf der Fahrzeugaußenseite - also zwischen dem Fahrzeuginsasse und der Fahrzeugaußenwand - angeordnet ist.

Alternativ oder zusätzlich kann die Stützeinrichtung zumindest ein Stützelement umfassen, das im Inneren des Gassacks oder außen am Gassack angeordnet ist und Lateralkräfte aufnimmt, wenn der Fahrzeuginsasse im Falle eines Unfalls in den Gassack eintaucht. Ein solches Stützelement kann beispielsweise durch eine Platte oder dergleichen gebildet sein.

Das Stützelement kann im Falle eines Unfalls auf verschiedene Arten in seine Arbeits-bzw. Schutzposition gebracht werden. Denkbar ist es beispielsweise, das Stützelement durch Klappen, durch Drehen, durch Ausfahren eines Teleskopsystems, durch Schwenken oder durch eine Rollladentechnik in die Schutz- bzw. Stützposition zu bringen.

Um zu vermeiden, dass der Fahrzeuginsasse unmittelbar mit dem Stützelement in Kontakt treten und sich dadurch verletzen kann, wird es als vorteilhaft angesehen, wenn das Stützelement mit der dem Fahrzeuginsassen abgewandten Gassacklage des Gassacks verbunden ist. Bei dieser Anordnung des Stützelements ist nämlich sichergestellt, dass zwischen dem Stützelement und dem Fahrzeuginsassen eine "Gas-Polsterschicht" vorhanden ist, die den Fahrzeuginsassen vor dem Stützelement schützt.

Im Übrigen wird es als vorteilhaft angesehen, wenn die Sicherheitsvorrichtung ausschließlich am Sitz oder an der Sitzbank montiert ist. Durch die sitzfeste Montage wird sichergestellt, dass sich die Sicherheitsvorrichtung - vor einem Unfall - über den gesamten Sitzverstellbereich sowie den gesamten Bereich der Lehneneinstellung (im Falle einer Positionierung in der Sitzlehne) mitbewegt; dadurch wird eine stets optimale Position der Sicherheitsvorrichtung gewährleistet, so dass eine minimale Gassackgröße für einen wirkungsvollen Insassenschutz ausreicht.

Die Erfindung bezieht sich darüber hinaus auf ein Verfahren zum Schützen eines Fahrzeuginsassen im Falle eines Unfalls, bei dem ein Gassack aufgeblasen und seitlich neben dem Fahrzeuginsassen entfaltet wird, wobei der Gassack derart abgestützt wird, dass eine seitliche Bewegung des Gassacks beim Eintauchen des Fahrzeuginsassen in den Gassack verhindert oder zumindest reduziert wird.

Bezüglich eines solchen Verfahrens liegt der Erfindung die Aufgabe zugrunde, Verletzungen des Fahrzeuginsassen im Unfallfall so gering wie möglich zu halten.

Diese Aufgabe wird ausgehend von einem Verfahren der beschriebenen Art erfindungsgemäß dadurch gelöst, dass der Gassack auf der Fahrzeuginnenseite des Fahrzeuginsassen entfaltet wird.

Bezüglich der Vorteile des erfindungsgemäßen Verfahrens wird auf die obigen Ausführungen im Zusammenhang mit der erfindungsgemäßen Sicherheitsvorrichtung verwiesen. Entsprechendes gilt für vorteilhafte Ausgestaltungen des erfindungsgemäßen Verfahrens.

Zur Erläuterung der Erfindung zeigen:
- Figur 1: ein erstes Ausführungsbeispiel für eine Sicherheitsvorrichtung mit einem Gassack, der mit Spannbändern in seiner "Schutzposition" gehalten wird, wobei der Gassack einen Kopfbereich zum Schutz des Kopfes des zu schützenden Fahrzeuginsassen aufweist,
- Figur 2: ein zweites Ausführungsbeispiel für eine Sicherheitsvorrichtung mit einem Gassack ohne Kopfbereich,
- Figuren 3 und 4: die Platzierung der Spannbänder bei den Ausführungsbeispielen gemäß den Figuren 1 und 2 anhand eines leeren und eines mit einem Fahrzeuginsassen besetzten Fahrzeugsitzes und
- Figur 5: ein drittes Ausführungsbeispiel für eine erfindungsgemäße Sicherheitsvorrichtung mit einem im Gassack integrierten Stützelement als Stützeinrichtung.

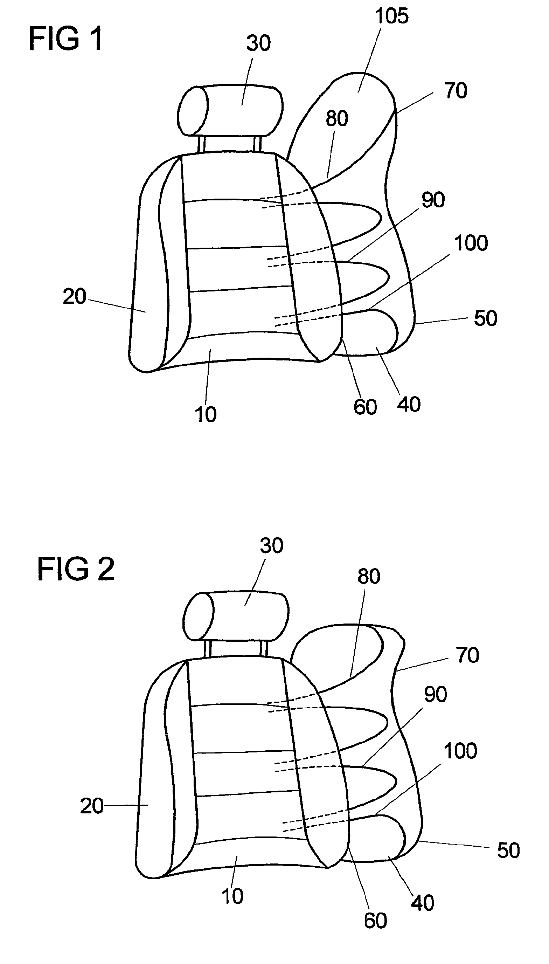

Für identische oder vergleichbare Komponenten werden in den Figuren 1 bis 5 dieselben Bezugszeichen verwendet.

In der Figur 1 erkennt man einen Fahrzeugsitz 10 mit einer Rückenlehne 20 und einer Kopfstütze 30. Bei dem Fahrzeugsitz kann es sich beispielsweise um einen Einzelsitz oder um einen Sitz einer Sitzbank handeln. Seitlich am Fahrzeugsitz 10, und zwar auf der dem Fahrzeuginneren zugewandten Seite des Fahrzeugsitzes, ist eine Sicherheitsvorrichtung 40 angebracht. Die Sicherheitsvorrichtung 40 weist einen Gassack 50 auf, der im Falle eines Fahrzeugunfalls oder einer Gefahrensituation (z. B. "Pre-Crash-Situation") von einem in der Figur 1 nicht dargestellten Gasgenerator aufgeblasen und entfaltet wird. Der Gassack 50 positioniert sich dabei seitlich neben dem Fahrzeuginsassen auf der Fahrzeuginnenseite des Fahrzeugs.

Der Gassack 50 weist einen Hüllenabschnitt 60 auf, mit dem der Gassack 50 im Bereich des Fahrzeugsitzes befestigt ist; dieser Hüllenabschnitt 60 kann somit als "Befestigungsabschnitt" bezeichnet werden. Dem Hüllenabschnitt 60 abgewandt ist eine Vorderkante 70 des Gassacks 50, die bei entfaltetem Gassack seitlich neben dem Fahrzeugsitz 10 angeordnet ist und gegenüber der Rückenlehne 20 (im Falle eines in Fahrtrichtung orientierten Fahrzeugsitzes) in Fahrtrichtung nach vorne vorsteht.

An der Vorderkante 70 des Gassacks 50 sind drei Spannbänder 80, 90 und 100 angebracht, die mit dem Fahrzeugsitz 10 in Verbindung stehen. Die Aufgabe der Spannbänder 80, 90 und 100 besteht darin, den im Falle eines Unfalls entfalteten Gassack 50 seitlich zu halten, so dass ein in den Gassack 50 eintauchender Fahrzeuginsasse ein Wegknicken oder Ausweichen des Gassacks 50 nicht auslösen kann.

Wie sich in der Figur 1 erkennen lässt, weist der Gassack 50 einen Kopfabschnitt 105 auf, der zum Schutz des Kopfes des zu schützenden Fahrzeuginsassen in Kopfhöhe positioniert wird.

In der Figur 2 ist ein Ausführungsbeispiel für eine Sicherheitsvorrichtung 40 mit einem Gassack 50 ohne Kopfabschnitt gezeigt; ansonsten entspricht der Gassack 50 gemäß der Figur 2 dem Gassack 50 gemäß der Figur 1. Man erkennt in der Figur 2, wie die Spannbänder 80, 90 und 100 die Position des Gassackes 50 fixieren.

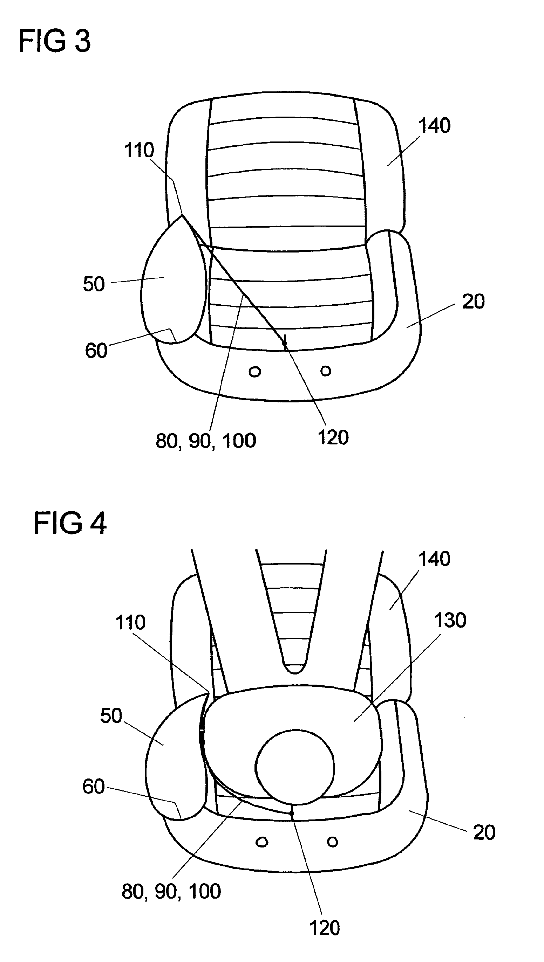

In den Figuren 3 und 4 ist eine Draufsicht auf den Fahrzeugsitz 10 mit der Sicherheitsvorrichtung 40 gemäß der Figur 1 oder der Figur 2 dargestellt. Man erkennt die drei Spannbänder 80, 90 und 100, die jeweils mit ihrem einen Spannbandende 110 mit dem Gassack 50 und mit ihrem anderen Spannbandende 120 mit dem Fahrzeugsitz 10, beispielsweise dem Sitz selbst oder der Sitzstruktur des Fahrzeugsitzes, verbunden sind.

In der Figur 4 ist die Lage bzw. die Position der drei Spannbänder 80, 90 und 100 erkennbar, wenn sich ein Fahrzeuginsasse 130 auf einer Sitzfläche 140 des Fahrzeugsitzes 10 befindet. Man sieht, dass der Fahrzeuginsasse 130 auf die Spannbänder 80, 90 und 100 drückt, sobald er sich in Richtung des Gassacks 50 bewegt. Aufgrund des Wegdrückens der Spannbänder 80, 90 und 100 wird die Zugkraft der Spannbänder noch erhöht, so dass die Stützwirkung der Spannbänder auf den Gassack 50 ebenfalls noch weiter vergrößert wird.

Der Gassack 50 gemäß den Figuren 1 bis 4 wird mit einem Gassackinnendruck von zumindest 100 kPa, vorzugsweise von mindestens 150 kPa aufgeblasen, um sicherzustellen, dass der Gassack ausreichend stabil und fest ist und ein Nachgeben des Gassacks oder ein Wegknicken des Gassacks ausgeschlossen ist.

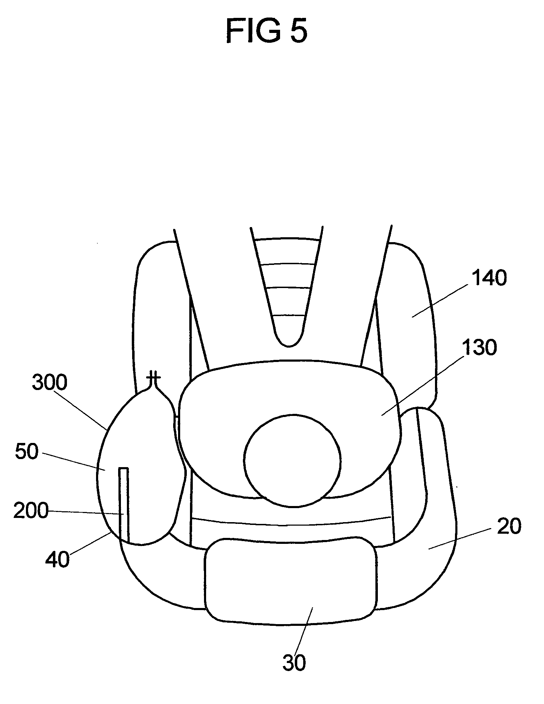

In der Figur 5 ist eine dritte Ausgestaltung einer Sicherheitsvorrichtung 40 gezeigt. Die Stützwirkung des Gassacks 50 wird bei diesem dritten Ausführungsbeispiel mit einem Stützelement 200 erreicht, das im Inneren des Gassacks 50 angeordnet ist. Das Stützelement 200 ist derart ausgestaltet, dass es im aktivierten Zustand Lateralkräfte aufnehmen und bei einem Seitenaufprall eine Bewegung des Gassacks 50 in Stoßrichtung einschränken kann. Das Stützelement 200 ist vorzugsweise mit der insassenabgewandten Gassacklage 300 des Gassacks 50 verbunden, so dass sich ein schützendes Luftpolster im Gassack 50 zwischen dem Stützelement 200 und dem Fahrzeuginsassen 130 ausbilden kann.

Das Stützelement 200 kann durch Klappen, Drehen, Schwenken, Ausfahren eines Teleskopsystems oder durch eine Rollladentechnik in seine in der Figur 5 gezeigte "Schutzposition" geschwenkt werden.

In der Figur 5 ist der Übersichtlichkeit halber lediglich ein einziges Stützelement 200 gezeigt. Die Sicherheitsvorrichtung kann jedoch zusätzlich weitere Stützelemente aufweisen, um die Stützwirkung auf den Gassack 50 zu erhöhen.

Im Übrigen können die im Zusammenhang mit den Figuren 1 und 4 erläuterten Spannbänder 80, 90 und 100 auch in Kombination mit dem in Zusammenhang mit der Figur 5 erläuterten Stützelement 200 eingesetzt werden.

Den drei im Zusammenhang mit den Figuren 1 bis 5 erläuterten Ausführungsbeispielen ist gemeinsam, dass der Fahrzeuginsasse 130 in seinem Sitzbereich durch den Gassack 50 fixiert wird; dadurch wird erreicht, dass er nicht in Interaktion mit intrudierenden Fahrzeugteilen, dem Interieur des Fahrzeugs oder anderen Fahrzeuginsassen treten kann. Außerdem werden Abdomenverletzungen durch ein Einschneiden des Sicherheitsgurtes (in den Figuren 1 bis 5 der Übersichtlichkeit nicht dargestellt) in "Weichteile" des Fahrzeuginsassen verhindert, wenn dieser im Falle eines Unfalls in Richtung des Gurtschlosses des Sicherheitsgurtes bewegt wird.

Durch die in den Figuren gezeigte sitzfeste Montage der Sicherheitsvorrichtung 40 ist sichergestellt, dass sich diese über den gesamten Sitzverstellbereich sowie den gesamten Lehneneinstellbereich mitbewegt; dadurch wird erreicht, dass der Gassack 50 relativ zum Fahrzeuginsassen stets die optimale Position einnimmt. Die Gassackgröße und damit der Abdeckbereich des Gassacks können somit sehr klein gewählt werden.

### Bezugszeichenliste

- 10: Fahrzeugsitz
- 20: Rückenlehne
- 30: Kopfstütze
- 40: Sicherheitsvorrichtung
- 50: Gassack
- 60: Befestigungsabschnitt
- 70: Vorderkante
- 80, 90, 100: Spannbänder
- 105: Kopfabschnitt des Gassacks
- 110: Befestigungsstelle des Spannbandes
- 120: Befestigungsstelle des Spannbandes
- 130: Fahrzeuginsasse
- 140: Sitzfläche
- 200: Stützelement
- 300: Gassacklage

## Patentansprüche

1. Sicherheitsvorrichtung, insbesondere für ein Kraftfahrzeug, mit einem aufblasbaren Gassack (50), der zum Schützen eines auf einem Fahrzeugsitz (10) befindlichen Fahrzeuginsassen (130) - insbesondere bei Eintritt eines Unfalls oder einer Gefahrensituation - aufgeblasen und seitlich neben dem Fahrzeuginsassen (130) entfaltet wird, und mit einer mit dem Gassack (50) zusammenwirkenden Stützeinrichtung (80, 90, 100, 200), die eine seitliche Bewegung des Gassacks (50) beim Eintauchen des Fahrzeuginsassen (130) in den Gassack (50) verhindert oder zumindest reduziert,
**dadurch gekennzeichnet, dass**
der Gassack (50) auf der der Fahrzeuginnenseite zugewandten Seite des Fahrzeuginsassen (130) entfaltet wird.

2. Sicherheitsvorrichtung nach Anspruch 1, **dadurch gekennzeichnet, dass** der Gassack (50) derart ausgestaltet ist, dass er im Falle eines Unfalls auf einen Druck von zumindest 100 kPa aufblasbar ist.

3. Sicherheitsvorrichtung nach Anspruch 1 oder 2 **,dadurch gekennzeichnet, dass** der Gassack (50) ein Gassackhüllenmaterial und eine in oder an dem Gassackhüllenmaterial befindliche, zusätzliche Isolationsschicht aufweist, die weniger gasdurchlässig als das Gassackhüllenmaterial (40) ist.

4. Sicherheitsvorrichtung nach Anspruch 3, **dadurch gekennzeichnet, dass** die Isolationsschicht durch eine auf dem Gassackhüllenmaterial aufgebrachte Beschichtung gebildet ist.

5. Sicherheitsvorrichtung nach Anspruch 3 oder 4, **dadurch gekennzeichnet, dass** die Isolationsschicht Silikon oder eine Silikonverbindung aufweist oder aus Silikon oder einer Silikonverbindung besteht.

6. Sicherheitsvorrichtung nach einem der voranstehenden Ansprüche, **dadurch gekennzeichnet, dass** die Stützeinrichtung (80, 90, 100, 200) zumindest ein Spannband (80, 90, 100) aufweist, das mit einem Spannbandende (110) mit dem Gassack (50) und mit einem anderen Spannbandende (120) mit dem Fahrzeugsitz (10) in Verbindung steht.

7. Sicherheitsvorrichtung nach Anspruch 6, **dadurch gekennzeichnet, dass** das mit dem Gassack (50) in Verbindung stehende Spannbandende (110) im Bereich eines Gassack-Hüllenabschnittes (70) angebracht ist, der von einem Befestigungsabschnitt (60) des Gassacks (50) am Fahrzeugsitz (10) beabstandet ist.

8. Sicherheitsvorrichtung nach Anspruch 7, **dadurch gekennzeichnet, dass** das mit dem Gassack (50) in Verbindung stehende Spannbandende (110) im Bereich einer Vorderkante (70) des Gassacks angebracht ist.

9. Sicherheitsvorrichtung nach einem der voranstehenden Ansprüche 6 bis 8, **dadurch gekennzeichnet, dass** das zumindest eine Spannband (80, 90, 100) derart angeordnet ist, dass es durch den in den Gassack eintauchenden Fahrzeuginsassen gespannt wird.

10. Sicherheitsvorrichtung nach Anspruch 9, **dadurch gekennzeichnet, dass** das zumindest eine Spannband (80, 90, 100) abschnittsweise im Bereich der Schulter und/oder des Rückens des Fahrzeuginsassen verläuft.

11. Sicherheitsvorrichtung nach einem der voranstehenden Ansprüche, **dadurch gekennzeichnet, dass** die Stützeinrichtung zumindest ein Stützelement (200) umfasst, dass im Inneren des Gassacks (50) oder außen am Gassack (50) angeordnet ist und Lateralkräfte aufnimmt, wenn der Fahrzeuginsasse (130) in den Gassack eintaucht.

12. Sicherheitsvorrichtung nach Anspruch 11, **dadurch gekennzeichnet, dass** das Stützelement (200) im Falle eines Unfalls durch Klappen, durch Drehen, durch Ausfahren eines Teleskopsystems, durch Schwenken oder durch eine Rolladentechnik in seine Arbeitsposition gebracht wird.

13. Sicherheitsvorrichtung nach Anspruch 11 oder 12, **dadurch gekennzeichnet, dass** das Stützelement (200) mit einer dem Fahrzeuginsassen (130) abgewandten Gassacklage (300) des Gassacks (50) verbunden ist.

14. Sicherheitsvorrichtung nach einem der voranstehenden Ansprüche, **dadurch gekennzeichnet, dass** die Sicherheitsvorrichtung (40) ausschließlich am Fahrzeugsitz (10) montiert ist.

15. Verfahren zum Schützen eines Fahrzeuginsassen (130), bei dem ein Gassack (50) aufgeblasen und seitlich neben dem Fahrzeuginsassen (130) entfaltet wird, wobei der Gassack (50) derart abgestützt wird, dass eine seitliche Bewegung des Gassacks (50) beim Eintauchen des Fahrzeuginsassen (130) in den Gassack (50) verhindert oder zumindest reduziert wird,
**dadurch gekennzeichnet, dass**
der Gassack (50) auf der Fahrzeuginnenseite entfaltet wird.

16. Verfahren nach Anspruch 15, **dadurch gekennzeichnet, dass** der Gassack (50) im Falle eines Unfalls auf einen Druck von zumindest 100 kPa aufgeblasen wird.

17. Sicherheitsvorrichtung, insbesondere für ein Kraftfahrzeug, mit einem aufblasbaren Gassack, der zum Schützen eines auf einem Fahrzeugsitz befindlichen Fahrzeuginsassen (130) - insbesondere bei Eintritt eines Unfalls - aufgeblasen und seitlich neben dem Fahrzeuginsassen (130) entfaltet wird, und mit einer mit dem Gassack (50) zusammenwirkenden Stützeinrichtung (80, 90, 100, 200), die eine seitliche Bewegung des Gassacks (50) beim Eintauchen des Fahrzeuginsassen (130) in den Gassack (50) verhindert oder zumindest reduziert, wobei die Stützeinrichtung (80, 90, 100, 200) zumindest ein Spannband (80, 90, 100) aufweist, das mit einem Spannbandende (110) mit dem Gassack (50) und mit einem anderen Spannbandende (120) mit dem Fahrzeugsitz (10) in Verbindung steht und wobei das zumindest eine Spannband (80, 90, 100) derart angeordnet ist, dass es durch den in den Gassack eintauchenden Fahrzeuginsassen gespannt wird.

18. Sicherheitsvorrichtung nach Anspruch 17, **dadurch gekennzeichnet, dass** das zumindest eine Spannband (80, 90, 100) abschnittsweise im Bereich der Schulter und/oder des Rückens des Fahrzeuginsassen verläuft.
